Europäisches Patentamt

European Patent Office

Office européen des brevets

(19)

(11)    EP 0 660 094 B1

(12)    EUROPEAN PATENT SPECIFICATION

(45) Date of publication and mention
     of the grant of the patent:
     **28.04.1999   Bulletin 1999/17**

(51) Int Cl.[6]: **G01K 7/22**, H01C 1/14,
     H01C 1/142

(21) Application number: **94120008.1**

(22) Date of filing: **16.12.1994**

(54) **NTC thermistor element**

Thermistorelement mit negativem Temperaturkoeffizient

Elément thermistor à coefficient de temperature négatif

(84) Designated Contracting States:
     **DE GB**

(30) Priority: **21.12.1993   JP 321839/93**

(43) Date of publication of application:
     **28.06.1995   Bulletin 1995/26**

(73) Proprietor: **MURATA MANUFACTURING CO., LTD.
     Nagaokakyo-shi Kyoto-fu 226 (JP)**

(72) Inventors:
 • **Ishikawa, Terunobu,
   c/o Murata Manufac. Co., Ltd.
   Nagaokakyo-shi, Kyoto-fu (JP)**
 • **Niimi, Hideaki, c/o Murata Manufac. Co., Ltd.
   Nagaokakyo-shi, Kyoto-fu (JP)**
 • **Nakayama, Akinori,
   c/o Murata Manufac. Co., Ltd.
   Nagaokakyo-shi, Kyoto-fu (JP)**
 • **Takagi, Hiroshi, c/o Murata Manufac. Co., Ltd.
   Nagaokakyo-shi, Kyoto-fu (JP)**
 • **Tomono, Kunisaburo,
   c/o Murata Manufac. Co., Ltd.
   Nagaokakyo-shi, Kyoto-fu (JP)**

(74) Representative:
     **TER MEER STEINMEISTER & PARTNER GbR
     Mauerkircherstrasse 45
     81679 München (DE)**

(56) References cited:
 • PHYSICAL REVIEW, B. SOLID STATE, vol.6,
   no.3, 1 August 1972, NEW YORK US pages 1021
   - 1032 V.G. BHIDE E.A. 'MOSSBAUER STUDIES
   OF THE HIGH-SPIN-LOW-SPIN EQUILIBRIA AND
   THE LOCALIZED-COLLECTIVE ELECTRON
   TRANSITION IN LaCoO3'
 • PATENT ABSTRACTS OF JAPAN vol. 18, no. 20
   (E-1489) 13 January 1994 & JP-A-05 258 906 (TDK
   CORP) 8 October 1993
 • PATENT ABSTRACTS OF JAPAN vol. 18, no. 33
   (E-1493) 18 January 1994 & JP-A-05 267 003 (TDK
   CORP) 15 October 1993
 • PATENT ABSTRACTS OF JAPAN vol. 16, no. 492
   (E-1278) 12 October 1992 & JP-A-04 180 602
   (MITSUBISHI MATERIALS CORP.) 26 June 1992
 • PATENT ABSTRACTS OF JAPAN vol. 15, no. 26
   (E-1025) 22 January 1991 & JP-A-02 270 303
   (MATSUSHITA ELECTRIC IND CO) 5 November
   1990
 • PATENT ABSTRACTS OF JAPAN vol. 16, no. 389
   (E-1250) 19 August 1992 & JP-A-04 127 401
   (MITSUBISHI MATERIALS CORP) 28 April 1992
 • DATABASE WPI Week 8135, Derwent
   Publications Ltd., London, GB; AN 81-63385 &
   JP-A-56 087 302 (TDK) 15 July 1981

**Description**

The present invention relates to an NTC thermistor element as stated in the preamble of claim 1 comprising an NTC thermistor element assembly consisting of a rare earth element-transition element based oxide.

In a switching source, for example, an overcurrent flows immediately upon activation. Therefore, an NTC thermistor element is generally employed for absorbing the initial overcurrent, i.e., a rush current. The NTC thermistor element has such a property that its resistance is at a high level under the room temperature and reduced as the temperature is increased. Therefore, an NTC thermistor element which is applied to a switching source, for example, can suppress the aforementioned rush current due to its high initial resistance value. Thereafter the NTC thermistor element enters a low resistance state due to a temperature rise by self heating, whereby it is possible to reduce power consumption in the switching source in a stationary state. A material for forming such an NTC thermistor element is generally prepared from a transition element oxide having a spinel structure.

As hereinabove described, the resistance value of the NTC thermistor is reduced as the temperature is increased, and this property is indicated by a B constant. The B constant indicates resistance change caused by temperature change, such that the rate of reduction of the resistance value caused by a temperature rise is increased as the numerical value of the B constant is increased.

An NTC thermistor element which is employed for preventing a rush current must be at a small resistance value when its temperature is increased by self heating, in order to reduce power consumption in a stationary state. In the conventional NTC thermistor element, however, the B constant is generally reduced as the specific resistance is reduced. In an NTC thermistor element having a small resistance value in a temperature rise state, therefore, it is impossible to sufficiently suppress the rush current in an initial state. When an NTC thermistor element having a large B constant is selected, on the other hand, the resistance value cannot be sufficiently reduced in a temperature rise state due to high specific resistance and hence power consumption is increased in a stationary state, although this element can effectively suppress the rush current.

Further, the conventional NTC thermistor element is remarkably dispersed in initial resistance value due to change in outside air temperature, particularly at a low temperature of not more than 0°C. Consequently, effectuation of its function is disadvantageously retarded at a low temperature.

In order to solve the aforementioned problems, the B constant must be small in the ordinary temperature range of -50°C to +50°C and increased in a high temperature area of about 140°C.

Japanese Patent Publication No. 48-6352 (1973) discloses an NTC thermistor element having a composition prepared by adding 20 percent by weight of $Li_2CO_3$ to $BaTiO_3$, as an element whose B constant is abruptly increased at the phase transition point. In this NTC thermistor element, however, power is excessively consumed in a stationary state due to high specific resistance of at least $10^5$ $\Omega\cdot$cm at 140°C.

On the other hand, an element of $VO_2$ exhibiting sudden change thermistor (CTR) characteristics is known as an element which has an excellent effect of preventing an initial rush current in a switching source, for example. In the CTR element of $VO_2$, the specific resistance is reduced from 10 to 0.01 $\Omega\cdot$cm at a temperature of 80°C. Such a property of this element is excellent for preventing an initial rush current, as compared with the conventional NTC thermistor. However, $VO_2$ is so instable that the same must be rapidly quenched after reduction. Therefore, the element of $VO_2$ is restricted to a bead shape. Further, this element cannot be applied to a switching source for feeding a heavy current of several A, since its allowable current value is merely about several 10 mA.

On the other hand, V. G. Bhide et. al. describe in Physical Review, B. Solid State, vol. 6, no. 3 (1972) pages 1021-1032 that a rare earth element-Co-oxide based porcelain exhibits such negative temperature characteristics of resistance that its B constant is increased and the resistance value is reduced by a temperature rise.

The characteristics described in the aforementioned literature have been confirmed by forming Pt or Ag electrodes on surfaces of an element assembly consisting of the rare earth element-Co-oxide based porcelain. However, the Pt electrodes are so high-priced that the cost is extremely increased when the same are employed for forming an NTC thermistor element. On the other hand, it has been recognized that the resistance value of an NTC thermistor element which is formed by Ag electrodes is extremely changed when the same is allowed to stand in the wet or the like, due to migration or oxidation of the electrodes.

From JP-A-52-58906 a chip-type thermistor is already known having a chip-like calcined body and cap-like electrodes formed on both end parts of the body. Each of these electrodes comprises a base electrode and a cover electrode. The former consists of Ag/Pd alloy containing Pd content of 15wt.% or more whereas the latter consists of Ag/Pd alloy containing Ag content of 20wt.% or more. The Ag/Pd alloy used for the cover electrode has a frit content of 3wt.% or less. The frit content of the Ag/Pd alloy used for the base electrode is not specified. Further, no information is given about the material used for the chip-like calcined body of the thermistor.

The object of the present invention is to provide an NTC thermistor element having a small resistance value in a temperature rise state for reducing power consumption in this state, small dispersion in resistance value at the room temperature, and a quick rise speed, which is applicable to a heavy current use, at a low cost with excellent reliability.

The NTC thermistor element according to the present invention comprises an NTC thermistor element assembly consisting of a rare earth element-transition element based oxide, and electrodes, mainly composed of $Ag_{1-x}Pd_x$ ($0.01 \leq X \leq 1$) and being free of frit material, which are formed on both major surfaces of the NTC thermistor element assembly.

Due to the electrodes which are composed of $Ag_{1-x}Pd_x$, it is possible to provide the inventive NTC thermistor element at a lower cost than an element provided with Pd electrodes. Further, the electrodes of the inventive NTC thermistor element hardly cause oxidation or migration which is caused in an element employing Ag electrodes when the same is allowed to stand in the wet.

In addition, the NTC thermistor element assembly consists of the rare earth element-transition element based oxide, whereby it is possible to attain resistance stability under a low temperature and a sufficiently small resistance value under a high temperature, as clearly understood from Example described later. Further, the inventive NTC thermistor element has such a large allowable current value that the same is applicable to a heavy current use.

Thus, the NTC thermistor element according to the present invention is effectively employable as an element for preventing a rush current in a switching source, for example. Further, the inventive NTC thermistor element is widely applicable to various uses for protecting a general electronic circuit or electric lamp which is supplied with a heavy current in an initial state of current application, for serving as an element for retarding starting of a motor, for protecting a drum of a laser printer, for protecting a halogen lamp or the like.

According to the present invention, the rare earth element-transition element based oxide is prepared from an oxide of a rare earth element such as La, Ce, Y or Sc and a transition metal element such as Co or Mn, for example, and preferably prepared from a rare earth element-Co oxide. More preferably, La is employed as the rare earth element.

The aforementioned NTC thermistor element assembly consisting of the rare earth element-transition element based oxide is generally prepared by the following method: First, rare earth element oxide powder and transition metal element powder are blended with each other at a specific ratio. In general, the rare earth element and the transition metal element are blended to be in a molar ratio of about 3:5 to 11:10. Then, the mixed powder as obtained is wet-blended, dried and thereafter calcined. The calcined powder is again wet-blended and crushed, to obtain raw material powder. Binder resin such as vinyl acetate is added to the raw material powder in a prescribed ratio, so that the mixture is granulated and thereafter press-molded into a prescribed shape. The compact as obtained is maintained at a prescribed temperature to be sintered, thereby obtaining an NTC thermistor element assembly.

In the present invention, the NTC thermistor element assembly is prepared through the aforementioned press-molding step. Thus, it is possible to readily obtain an NTC thermistor element assembly having a desired shape such as a discoidal shape or an angular plate shape.

According to the present invention, the electrodes which are formed on both major surfaces of the NTC thermistor element assembly consist of the material mainly composed of $Ag_{1-x}Pd_x$, as hereinabove described. The electrodes having such a composition are formed by blending Ag powder and Pd powder in a prescribed ratio, kneading the mixture with a binder and a solvent for preparing conductive paste, applying the conductive paste onto the major surfaces of the element assembly, and baking the same. Alternatively, the electrodes mainly composed of $Ag_{1-x}Pd_x$ may be prepared by another method such as vapor deposition or sputtering.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 illustrates temperature characteristics of resistance of NTC thermistor elements according to Example and comparative example; and
Fig. 2 illustrates current/voltage characteristics of the NTC thermistor elements according to Example and comparative example.

DESCRIPTION OF THE PREFERRED EMBODIMENTS

Non-restrictive Example of the present invention is now described with reference to the drawings.

$Co_3O_4$ powder and $La_2O_3$ powder were weighed to be in a mole ratio La/Co of 0.95. The $Co_3O_4$ powder and the $La_2O_3$ powder as weighed were wet-blended with each other by a ball mill with pure water, and the mixed powder as obtained was dried. The dried mixed powder was calcined at 1000°C for 2 hours. The calcined powder was again wet-blended by a ball mill with pure water for 16 hours, and thereafter crushed to obtain raw material powder. 3 percent by weight of vinyl acetate for serving as a binder was added to the raw material powder, and the mixture was granulated. The granulated powder was press-molded into discoidal compacts each having a resistance value of 6 Ω across both major surfaces at the room temperature. These compacts were fired in the atmosphere at a temperature of 1350°C for 2 hours, to obtain NTC thermistor element assemblies.

Then, Ag-Pd conductive paste materials containing Ag and Pd in various ratios shown in Table 1 were applied to both major surfaces of the NTC thermistor element assemblies as obtained, and baked in the atmosphere at a temperature of 1000°C for 2 hours for forming electrodes, thereby preparing various NTC thermistor elements.

In order to compare characteristics provided by the electrode materials, Pt paste was applied to both major surfaces of an NTC thermistor element assembly which was prepared similarly to the above and baked to prepare an NTC thermistor element of comparative example 1. Further, In-Ga conductive paste was applied to both major surfaces of an NTC thermistor element assembly which was prepared similarly to the above and baked to prepare an NTC thermistor element of comparative example 2.

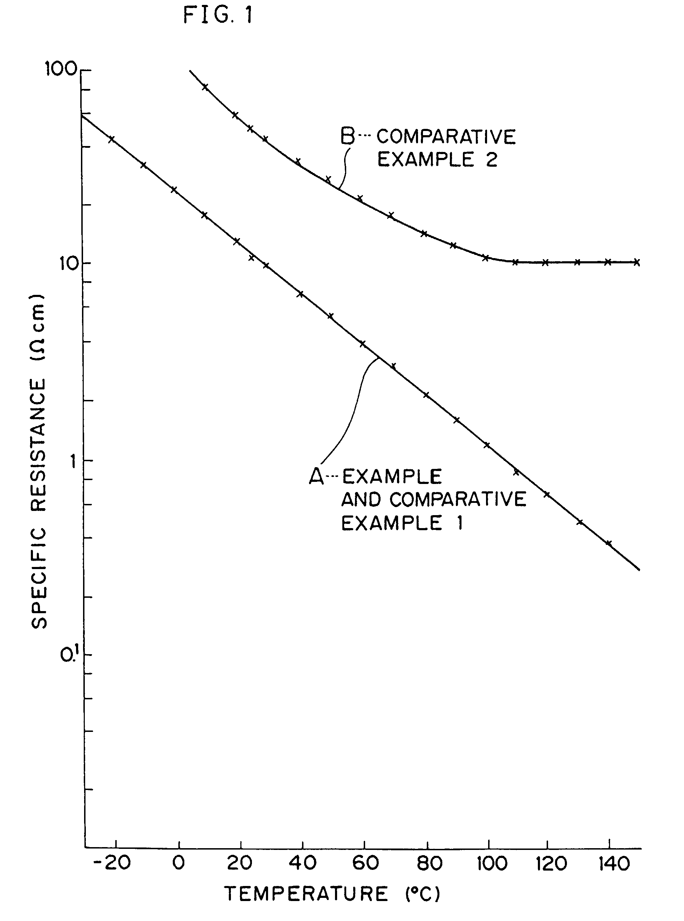

As to the various NTC thermistor elements prepared in the aforementioned manner, specific resistance values were measured at temperatures 25°C and 140°C. The results are shown in Table 1. Table 1 also shows rates of resistance change, i.e., B constants, calculated from the specific resistance values. Fig. 1 illustrates temperature characteristics of resistance of the NTC thermistor elements according to Example (solid line A) and comparative example 2 (solid line B).

Referring to Fig. 1, it has been confirmed that the NTC thermistor elements according to Example exhibited the characteristics shown by the solid line A regardless of the ratios of Ag and Pd. It has also been confirmed that the NTC thermistor element according to comparative example 1 also exhibited the temperature characteristics of resistance shown by the solid line A.

It is clearly understood from Table 1 and Fig. 1 that the electrodes consisting of $Ag_{1-X}Pd_X$, Ag and Pd exhibited the same temperature characteristics of resistance as the electrodes of Pt. It is also understood from the solid line B in Fig. 1 and Table 1 that the NTC thermistor element according to comparative example 2 employing the In-Ga electrodes exhibited temperature characteristics of resistance which were absolutely different from those of the NTC thermistor element employing the Pt electrodes.

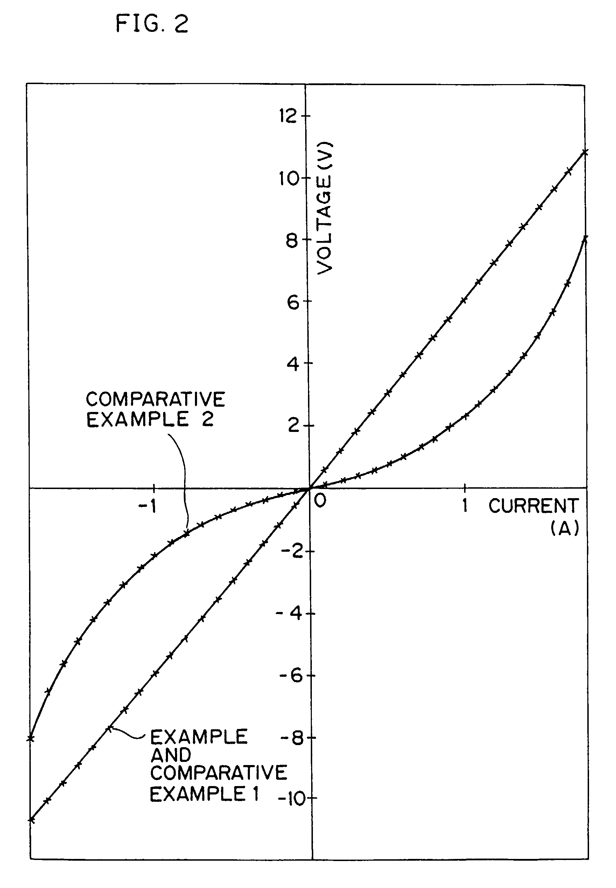

Fig. 2 shows current/voltage characteristics at the temperature of 25°C. It is understood from this graph that ohmic contact can be attained when the current and the voltage are in proportional relation to each other. Namely, it is clearly understood from Fig. 2 that the electrodes consisting of $Ag_{1-X}Pd_X$ and the Pt electrodes attained ohmic contact while the In-Ga electrodes attained no ohmic contact.

Table 2 shows results of wet and high temperature shelf tests which were made on the NTC thermistor elements according to Example employing the electrodes consisting of $Ag_{1-X}Pd_X$ ($0 \leq X \leq 1$) and the NTC thermistor element according to comparative example 1 having the electrodes mainly composed of Pt respectively. The wet shelf test was made by measuring specific resistance values of the NTC thermistor elements after allowing the same to stand in an atmosphere of 40°C with relative humidity of 95 %. The high temperature shelf test was made by measuring specific resistance values after allowing the elements to stand under a temperature of 200°C for 1000 hours.

In the NTC thermistor elements employing the Pt electrodes (comparative example 1) and the $Ag_{1-X}Pd_X$ electrodes ($0.01 \leq X$) (Example), the characteristics remained unchanged after the wet and high temperature shelf tests. Also in the NTC thermistor element employing the 100 % Pd electrodes, i.e., $X = 1$, the characteristics remained unchanged after the wet and high temperature shelf tests.

On the other hand, it is understood that the resistance value of the NTC thermistor element employing the Ag electrodes was extremely increased after the wet and high temperature shelf tests, conceivably because of oxidation of the electrodes. It has also been recognized that the resistance was increased in an NTC thermistor element having electrodes of $Ag_{1-X}Pd_X$ where X was less than 0.01 conceivably because of oxidation of the electrodes. Thus, the value of X must be at least 0.01, in order to improve reliability.

Assuming that $\rho(T_1)$ and $\rho(T_2)$ represent specific resistance values at $T_1$°C and $T_2$°C respectively, it is possible to define the B constant, which is a constant indicating resistance change caused by temperature change, as follows:

$$B \text{ constant} = \frac{\log_e \rho(T_2) - \log_e \rho(T_1)}{\dfrac{1}{T_2 + 273.15} - \dfrac{1}{T_1 + 273.15}}$$

The rate of reduction of resistance caused by a temperature rise is increased as the numerical value of the B constant is increased. On the basis of this fact, constants B(-10, 25) and B(25, 140) employed this time are respectively set as the following equations (1) and (2):

$$B(-10,25) = \frac{\log_e \rho(T_2) - \log_e \rho(T_1)}{\dfrac{1}{-10 + 273.15} - \dfrac{1}{25 + 273.15}} \qquad (2)$$

$$B(25,140) = \frac{\log_e \rho(T_2) - \log_e \rho(T_1)}{\dfrac{1}{140 + 273.15} - \dfrac{1}{25 + 273.15}} \qquad (3)$$

Dispersion in resistance depending on the outside air temperature is reduced as the constant B(-10, 25) is reduced, while it is possible to reduce power consumption at an ordinary temperature as the constant B(25, 140) is increased. Thus, the inventive NTC thermistor element is excellent as an element for preventing an initial rush current in a switching source, for example.

Although the present invention has been described and illustrated in detail, it is clearly understood that the same is by way of illustration and example only and is not to be taken by way of limitation, the spirit and scope of the present invention being limited only by the terms of the appended claims.

Table 1

| Type of Electrode | | $\rho(25°C)\,\Omega \cdot cm$ ① | $\rho(140°C)\,\Omega \cdot cm$ ② | ①/② | B(-10,25) K | B(25,140) K |
|---|---|---|---|---|---|---|
| Major Element | Amount of X | | | | | |
| Ag | 0.000 | 10.7 | 0.374 | 28.6 | 2700 | 3600 |
| Ag-Pd | 0.005 | 10.7 | 0.374 | 28.6 | 2700 | 3600 |
| Ag-Pd | 0.010 | 10.7 | 0.374 | 28.6 | 2700 | 3600 |
| Ag-Pd | 0.999 | 10.7 | 0.374 | 28.6 | 2700 | 3600 |
| Pd | 1.000 | 10.7 | 0.374 | 28.6 | 2700 | 3600 |
| Pt | - | 10.7 | 0.374 | 28.6 | 2700 | 3600 |
| In-Ga | - | 50.0 | 10.0 | 5.0 | 1000 | 0.0 |

Table 2

| Type of Electrode | | Initial Specific Resistance $\Omega \cdot cm$ ① | Specific Resistance after Standing in the Wet $\Omega \cdot cm$ ② | ②/① | Specific Resistance after Standing in High Temperature $\Omega \cdot cm$ ③ | ②/① |
|---|---|---|---|---|---|---|
| Major Element | Amount of X | | | | | |
| Ag | 0.000 | 10.7 | 120.0 | 11.2 | 25.1 | 2.3 |
| Ag-Pd | 0.005 | 10.7 | 15.1 | 1.4 | 12.1 | 1.1 |
| Ag-Pd | 0.010 | 10.7 | 10.7 | 1.0 | 10.7 | 1.0 |
| Ag-Pd | 0.999 | 10.7 | 10.7 | 1.0 | 10.7 | 1.0 |
| Pd | 1.000 | 10.7 | 10.7 | 1.0 | 10.7 | 1.0 |
| Pt | - | 10.7 | 10.7 | 1.0 | 10.7 | 1.0 |

## Claims

1. An NTC thermistor element comprising

   - an NTC thermistor element assembly consisting of a rare earth element-transition element based oxide;

**characterized in that** electrodes mainly composed of $Ag_{1-x}Pd_x$, where $0.01 \leq x \leq 1$, and being free of frit material, are formed on both major surfaces of said NTC thermistor element assembly.

2. The NTC thermistor element in accordance with claim 1, wherein said rare earth element-transition element based oxide is a rare earth element-Co oxide.

3. The NTC thermistor element in accordance with claim 1 or 2, wherein said rare earth element is La.

**Patentansprüche**

1. NTC-Thermistorelement mit

   - einem NTC-Thermistorelementaufbau, der aus einem auf Seltenerdelement-Übergangselement basierenden Oxid besteht,

   **dadurch gekennzeichnet,** daß Elektroden, die hauptsächlich aus $Ag_{1-x}Pd_x$, wobei $0,01 \leq x \leq 1$ ist, zusammengesetzt und frei von Frittenmaterial sind, auf beiden Hauptoberflächen des NTC-Thermistorelementaufbaus ausgebildet sind.

2. NTC-Thermistorelement nach Anspruch 1, wobei das auf Seltenerdelement-Übergangselement basierende Oxid ein Seltenerdelement-Co-oxid ist.

3. NTC-Thermistorelement nach Anspruch 1 oder 2, wobei das Seltenerdelement La ist.

**Revendications**

1. Un élément de thermistance NTC comprenant :

   - un ensemble d'élément de thermistance consistant en un oxyde à base d'élément de terres rares - élément de transition ;

     caractérisé en ce que
     les électrodes principalement composées de $Ag_{1-x}Pd_x$, où $0,01 \leq x \leq 1$, et exemptes de matière frittée sont formées sur les deux surfaces principales dudit ensemble d'élément de thermistance NTC.

2. L'élément de thermistance NTC selon la revendication 1, dans lequel ledit oxyde à base d'élément de terres rares - élément de transition est un oxyde élément des terres rares - Co.

3. L'élément de thermistance NTC selon la revendication 1 ou 2, dans lequel ledit élément de terres rares est La.

FIG. 1

FIG. 2